# EUROPÄISCHE PATENTSCHRIFT

(11) **EP 4 082 893 B1**
(45) Veröffentlichungstag und Bekanntmachung des Hinweises auf die Patenterteilung: **05.04.2023**
(21) Anmeldenummer: 21171025.6
(22) Anmeldetag: 28.04.2021
(51) Int. Cl.: B64C 1/14, B64D 11/00, B60R 13/08, B64C 1/40

(54) **TEXTILE TÜRISOLIERUNG FÜR EINE PASSAGIERTÜR IN EINEM FLUGZEUG**
TEXTILE DOOR INSULATION FOR A PASSENGER DOOR IN AN AIRCRAFT
ISOLATION TEXTILE POUR PORTE PASSAGER DANS UN AVION

(43) Veröffentlichungstag der Anmeldung: 02.11.2022
(73) Patentinhaber: Airbus Operations GmbH, 21129 Hamburg (DE)
(72) Erfinder: Kirstein, Hauke, 21129 Hamburg (DE); Kyas, Gunter, 21129 Hamburg (DE)
(74) Vertreter: Schornack, Oliver

(56) Entgegenhaltungen:
- EP-A1- 2 018 317
- US-A- 4 785 741
- US-A1- 2011 101 160
- US-A1- 2015 329 194
- US-A1- 2018 346 091
- US-A1- 2019 048 649
- US-B2- 10 059 425

## Beschreibung

Die vorliegende Erfindung betrifft einen Flugzeugkabinenabschnitt, der eine Passagiertür und eine Türisolierung umfasst, sowie eine entsprechende Türisolierung und zugehöriges Flugzeug. Insbesondere betrifft die vorliegende Erfindung einen Flugzeugkabinenabschnitt mit einer Türisolierung, die in mindestens einer Richtung größer ist als eine Türöffnung der Passagiertür und wärmeisolierend und/oder luftstromhemmend ist. Ferner betrifft die vorliegende Erfindung eine solche Türisolierung und ein Flugzeug mit solch einem Flugzeugkabinenabschnitt oder einer Türisolierung.

In Flugzeugen befindet sich neben einer Passagiertür meist ein kurzer Gang, durch den die Passagiere das Flugzeug betreten und verlassen. Entlang des Gangs sind bestimmte Einrichtungen des Flugzeugs untergebracht, wie zum Beispiel Flugzeugküchen, Bordtoiletten oder andere Bereiche, in denen sich Kabinenpersonal und/oder Passagiere während des Flugs aufhalten.

Die Passagiertür und zugehörige Türöffnung unterbrechen eine Außenhaut und Au-ßenisolierung des Flugzeugs. Ferner ist die Passagiertür selbst oft nicht genauso gut isoliert wie der übrige Rumpf des Flugzeugs, beispielsweise aus Gewichtsgründen oder notwendigen technischen Vorrichtungen in der Passagiertür (wie zum Beispiel eine Notrutsche). Daher ist eine in die Flugzeugkabine zeigende Oberfläche der Passagiertür während des Flugs meist kälter als andere Wandabschnitte der Flugzeugkabine. Ferner kann auch ein kalter Luftstrom aus einem die Passagiertür umgebenden Schlitz austreten und in der Flugzeugkabine spürbar sein.

Dadurch ist die Luft in dem kurzen Gang meist kälter und wird von dort arbeitendem oder sich ausruhendem Kabinenpersonal als unangenehm empfunden. Gerade ein kalter Luftstrom wird auf Langstreckenflügen (zum Beispiel länger als vier Stunden Flugzeit in großer Flughöhe) besonders unangenehm wahrgenommen. Manche Mitglieder des Kabinenpersonals haben deshalb zum Beispiel Decken oder andere hierfür vorgesehene wulstförmige Gegenstände in den die Passagiertür umgebenden Schlitz, insbesondere am Fußboden, gesteckt.

US 2015/0329194 A1 betrifft eine Notausgangstür in einem Flugzeug, die dafür konzipiert ist, ausschließlich im Fall einer Evakuierung geöffnet zu werden. Gemäß einer Ausgestaltung wird die Tür über einen Verriegelungsmechanismus in der entsprechenden Türöffnung installiert, wobei der Verriegelungsmechanismus vier Abdeckungen umfassen kann. Dabei wird jede der Abdeckungen in die Außenhaut und/oder in die Notausgangstür integriert. Zum Öffnen der Tür können die Abdeckungen entfernt werden, zum Beispiel durch Aufschneiden.

US 2018/0346091 A1betrifft eine Cockpittür eines Flugzeugs, wobei eine Türöffnung von einem Vorhang verdeckt wird, der ein Blenden oder das Eindringen von Reflexionen in das Cockpit reduzieren soll.

Der Erfindung liegt daher die Aufgabe zugrunde, eine verbesserte Türisolierung für eine Passagiertür in einem Flugzeug bereitzustellen.

Diese Aufgabe wird durch einen Flugzeugkabinenabschnitt mit den Merkmalen gemäß Anspruch 1 und durch ein Flugzeug mit den Merkmalen gemäß Anspruch 9 gelöst.

Gemäß einem ersten Aspekt zum besseren Verständnis der vorliegenden Offenbarung umfasst ein Flugzeugkabinenabschnitt einen Türrahmen, der eine Türöffnung bildet, und eine Passagiertür, die an dem Türrahmen angeordnet ist und dazu eingerichtet ist, die Türöffnung zu verschließen. Die Türöffnung ist in einer Außenhaut und einem Rumpf des Flugzeugs vorgesehen und dient insbesondere dem Ein- und Aussteigen von Passagieren. Selbstverständlich kann es sich bei der Türöffnung und der Passagiertür auch um einen Notausstieg des Flugzeugs, beispielsweise eine Notausstiegstür über den Tragflächen des Flugzeugs, handeln.

Im Inneren der Flugzeugkabine kann sich an die Türöffnung anschließend ein Gang erstrecken, der von Einrichtungsgegenständen gesäumt ist, beispielsweise Schränken, Geräten für eine Bordküche und Trolleys oder auch Sitzreihen im Fall eines Notausstiegs. Ebenfalls können sich in diesem Bereich Sitzgelegenheiten für Kabinenpersonal befinden. Hier verwendete Begriffe wie "innen" und "außen" beziehen sich auf eine Flugzeugkabine, wobei "innen" innerhalb der Flugzeugkabine oder in Richtung eines Zentrums der Flugzeugkabine bedeutet und "außen" außerhalb der Flugzeugkabine oder des Flugzeugs oder in einer Richtung von einem Zentrum der Flugzeugkabine zu einer Umgebung des Flugzeugs hin bedeutet. So kann beispielsweise eine Innenverkleidung eine Innenseite und eine Außenseite aufweisen, wobei die Innenseite vom Inneren der Flugzeugkabine aus sichtbar sein kann und die Außenseite die gegenüberliegende Seite darstellt und zu einer Umgebung des Flugzeugs zeigt.

Der Flugzeugkabinenabschnitt umfasst ferner eine Türisolierung, die an der Passagiertür zumindest abschnittsweise anliegt und in mindestens einer Richtung größer ist als die Türöffnung, wobei die Türisolierung aus einem textilen Material hergestellt ist, das wärmeisolierend und/oder luftstromhemmend ist. Insbesondere ist die Türisolierung in der mindestens einen Richtung größer als das Türblatt der Passagiertür, sodass die Türisolierung einen Spalt zwischen der Passagiertür und dem Türrahmen und/oder einer Innenverkleidung der Flugzeugkabine neben der Türöffnung überdeckt.

Lediglich beispielhaft kann das Material der Türisolierung einen Wärmedurchgangskoeffizienten von 1 bis 30 W/(m^{2∗}K) und bevorzugt einen Wärmedurchgangskoeffizienten von 8 bis 12 W/(m^{2∗}K) aufweisen.

In einer Implementierungsvariante kann die Türisolierung so dimensioniert sein, dass sie in einem unteren Abschnitt größer ist als die Türöffnung und vorzugsweise auf einem Fußboden des Flugzeugkabinenabschnitts aufliegt. Es hat sich herausgestellt, dass insbesondere in dem Bereich der Passagiertür nahe dem Fußboden des Flugzeugkabinenabschnitts die meiste kalte Luft in die Flugzeugkabine strömt. Durch die so dimensionierte Türisolierung lässt sich dieser Luftstrom in einfacher Weise blockieren.

Da eine Passagiertür in einem Flugzeug gewöhnlich vier Seiten umfasst, bedeutet "in mindestens einer Richtung größer", dass die Türisolierung an einer der Seiten zumindest abschnittsweise größer ist als das Türblatt oder die Türöffnung. Zum Beispiel kann die Türisolierung an zwei gegenüberliegenden Seiten der Passagiertür größer sein als die Türöffnung, sodass die Türisolierung eine größere Breite aufweist als die Türöffnung. In einem anderen Beispiel ist die Türisolierung nach oben hin größer als die Türöffnung, sodass ein Spalt entlang eines Sturzes des Türrahmens von der Türisolierung überdeckt wird. In noch einem anderen Beispiel ist die Türisolierung nach unten hin größer als die Türöffnung, sodass ein Spalt entlang einer Türschwelle des Türrahmens von der Türisolierung überdeckt wird. Selbstverständlich kann die Türisolierung in jeglicher Kombination dieser Beispiele größer sein als die Türöffnung und dies optional auch nur in einem Abschnitt einer solchen Seite.

Die Türisolierung verhindert somit einen Strom kalter Luft, der durch einen Spalt in das Innere der Flugzeugkabine gelangt. Zumindest aber wird solch ein kalter Luftstrom verringert oder abgebremst. Ferner ermöglicht die Türisolierung eine Abschirmung der kalten Oberfläche der Passagiertür gegenüber dem Inneren der Flugzeugkabine. Somit kann durch einfache und kostengünstige Mittel der Arbeitsbereich des Kabinenpersonals oder ein Aufenthaltsbereich für Passagiere angenehmer gestaltet werden.

Zudem kann ein Teil oder die gesamte Passagiertür von der Türisolierung bedeckt sein, sodass diese optisch ansprechender gestaltet werden kann. Meist befinden sich auf einer Passagiertür eine Vielzahl von Ausbuchtungen und Vertiefungen, Griffen, Hebeln, Zeichen etc., die während des Flugs nicht sichtbar oder erreichbar sein müssen. Durch eine einheitlich gestaltete Türisolierung wird der Flugzeugkabinenabschnitt optisch stark aufgewertet.

In einer Implementierungsvariante überdeckt die Türisolierung die Passagiertür vollständig und den Spalt zwischen Türöffnung und Passagiertür an mindestens einer Seite der Passagiertür ebenfalls vollständig.

Ferner ist es möglich, auf der Türisolierung eine Applikation aufzubringen, zum Beispiel in Form eines Aufdrucks, einer Bestickung, etc. So lässt sich zum Beispiel ein Firmenlogo des Flugzeugbetreibers, ein Bild o. ä. aufbringen.

In einer Implementierungsvariante kann der Flugzeugkabinenabschnitt ein erstes Halteelement, das an dem Türrahmen und/oder an der Passagiertür angeordnet ist, und ein zweites Halteelement, das an und/oder in der Türisolierung angeordnet ist umfassen. Das zweite Halteelement ist insbesondere dazu eingerichtet, mit dem ersten Halteelement in Wirkverbindung zu treten und die Türisolierung zu halten.

Die Position eines zweiten Halteelements in/an der Türisolierung ist dabei so gewählt, dass sie mit einer Position eines ersten Halteelements korrespondiert und die Lage der Türisolierung relativ zu der Türöffnung und der Passagiertür so bestimmt, dass die Türisolierung jeweils die Passagiertür sowie einen Spalt zwischen Passagiertür und Türrahmen zumindest abschnittsweise bedeckt.

Zum Beispiel kann ein erstes Halteelement an dem Türrahmen in unmittelbarer Nähe zur Türöffnung und somit zur Passagiertür (wenn diese in einem geschlossenen Zustand ist) angeordnet sein. Ein korrespondierendes zweites Halteelement kann in/an einem Randbereich der Türisolierung angebracht sein. Treten nun dieses erste und zweite Halteelement in Wirkverbindung, wird der Randbereich der Türisolierung in Überdeckung mit dem Türrahmen gebracht, wodurch die Türisolierung den Spalt zwischen Passagiertür und Türrahmen überdeckt und die Türisolierung sicher in dieser Lage gehalten wird.

Mindestens ein erstes Halteelement kann alternativ oder zusätzlich an der Passagiertür angeordnet sein, während ein korrespondierendes zweites Halteelement an einer hierzu passenden Position der Türisolierung angeordnet ist. Dadurch kann die Türisolierung an der Passagiertür, beispielsweise an einer Innenverkleidung, einem Beschlag, einem Schwenkarm und/oder einer Einrichtung der Passagiertür befestigt werden und dafür sorgen, dass die Türisolierung an der Passagiertür anliegt.

Ein erstes und zweites Halteelement können zum Beispiel in einem äußeren Randbereich der Passagiertür bzw. der Türisolierung angeordnet sein. Dadurch kann die Türisolierung ebenfalls in einer Position gehalten werden, in der der Randbereich der Türisolierung einen Spalt zwischen Passagiertür und Türrahmen überdeckt. Beispielsweise kann sich die Türisolierung nach außen hin weiter (frei) erstrecken als die Position des zweiten Halteelements im Randbereich der Türisolierung. Hierbei kann auf Halteelemente am Türrahmen verzichtet werden.

Diese Anbringungsvarianten der Türisolierung an dem Türrahmen und/oder der Passagiertür bietet eine besonders platzsparende Anbringung der Türisolierung in dem Flugzeugkabinenabschnitt. Die Türisolierung nimmt lediglich entsprechend ihrer Dicke Platz in der Passagierkabine ein. Aufgrund heutiger Isoliermaterialien ist die Dicke der Türisolierung jedoch vernachlässigbar. Durch das Anliegen der Türisolierung an der Passagiertür wird fast kein Raum innerhalb der Flugzeugkabine durch die Türisolierung blockiert oder abgesperrt (wie dies beispielsweise bei einem Vorhang der Fall wäre).

Ferner sind keine wulstförmigen Elemente im Bodenbereich der Tür verlegt, die leicht verrutschen können und somit Stolperfallen und ähnliche Hindernisse darstellen können.

In einer anderen Implementierungsvariante kann das erste Halteelement ein magnetisches Material oder ein magnetisch wirksames Material umfassen und das zweite Halteelement dazu korrespondierend ein magnetisch wirksames Material oder ein magnetisches Material umfassen. Mit anderen Worten besteht ein Paar aus einem ersten und einem korrespondierenden zweiten Halteelement aus einem Magnet und einem magnetisch wirksamen Material. Bei dem magnetisch wirksamen Material kann es sich beispielsweise um ein Metall handeln. Diese Form der Anbringung der Türisolierung ist besonders gewichtssparend, da lediglich an vordefinierten Positionen eine begrenzte Anzahl von ersten und zweiten Halteelementen in dem Flugzeugkabinenabschnitt vorgesehen werden müssen.

In noch einer anderen Implementierungsvariante kann das magnetische Material oder das magnetisch wirksame Material des ersten Halteelements an einer Außenseite eines Verkleidungselements des Türrahmens oder der Passagiertür angeordnet sein. Mit anderen Worten ist das erste Halteelement auf einer von der Flugzeugkabine aus nicht sichtbaren Seite des Verkleidungselements angeordnet und somit "versteckt". Da Verkleidungselemente in Flugzeugen meist aus dünnem Kunststoff hergestellt sind, können die Magnetkräfte durch das Verkleidungselement hindurch wirken und die Türisolierung lässt sich auf das Verkleidungselement aufsetzen und "daran" befestigen.

In einer weiteren Implementierungsvariante können Bereiche des Verkleidungselements, an dessen Außenseite ein erstes Halteelement angeordnet ist, visuell oder haptisch gekennzeichnet sein. Zum Beispiel kann das Verkleidungselement an dieser Stelle eine andere Farbe, einen Aufkleber, eine Oberflächenstruktur (Aufrauhung, Rillen o.ä.), eine Vertiefung und/oder eine Erhöhung aufweisen. Somit lässt sich das erste Halteelement schnell auffinden und die Türisolierung lässt sich schnell in dem Flugzeugkabinenabschnitt anbringen.

In einer weiteren Implementierungsvariante kann das erste und zweite Halteelement zusammen einen Druckknopf oder einen Klettverschluss bilden. Diese beiden Arten der Halterung bestehen immer aus zwei korrespondierenden und mechanisch ineinander wirkenden Elementen, wobei eine Form an dem Türrahmen und/oder an der Passagiertür angeordnet ist und die andere Form an/in der Türisolierung vorgesehen ist.

Diese Art der Halteelemente ist (im Vergleich zu einem versteckten, magnetisch wirkenden Halteelement) zwar von der Flugzeugkabine aus sichtbar, erleichtert jedoch das Auffinden der Halteelemente. Ebenso kann eine Druckknopfhälfte bzw. eine Seite eines Klettverschlusses auch leicht bei bestehenden Flugzeugen nachgerüstet werden. Eine Druckknopfhälfte lässt sich beispielsweise über ein (Blind- ) Niet nachträglich in dem Flugzeugkabinenabschnitt anbringen. Eine Seite eines Klettverschlusses lässt sich leicht aufkleben. Zum Beispiel kann das erste Halteelement auf einer Innenseite eines Verkleidungselements am Türrahmen und/oder auf der Passagiertür angebracht werden.

Gemäß einem weiteren Aspekt zum besseren Verständnis der vorliegenden Offenbarung umfasst eine Türisolierung für eine Passagiertüre in einem Flugzeug mindestens ein Textil, das in mindestens einer Errichtung größer ist als die zugehörige Passagiertür. Durch die Verwendung eines Textils, das für gewöhnlich flexibel und in mehrere Richtungen biegsam ist, lässt sich die Türisolierung leicht an die Form der Passagiertür anpassen. Zudem kann ein Textil einfach zusammengefaltet werden, wodurch sich die Türisolierung kompakt lagern lässt.

In einer Implementierungsvariante kann die Türisolierung mindestens ein Halteelement umfassen, das in oder an dem mindestens einen Textil angebracht ist und dazu eingerichtet ist, die Türisolierung zu halten. Das Halteelement kann dabei in der Türisolierung integriert sein, beispielsweise in dem Textil integriert sein.

Wenn es sich zum Beispiel um ein Metall handelt, kann dies in dem Textil in Form von metallenen Fasern integriert sein. Alternativ oder zusätzlich kann auch ein Metallstück von dem Textil umschlossen sein oder an dem Textil angebracht sein, beispielsweise eingenäht und/oder angenäht. Gleiches gilt für andere Formen von Halteelementen, wie zum Beispiel ein Magnet, eine Druckknopfhälfte oder eine Seite eines Klettverschlusses.

Das mindestens eine Halteelement ist an/in der Türisolierung so angeordnet, dass es die Türisolierung halten kann. Vorzugsweise ist das mindestens eine Halteelement an/in einem Randbereich der Türisolierung angebracht. Zum Beispiel kann eine Vielzahl von Halteelementen entlang eines Umfangs der Türisolierung angeordnet sein, um die gesamte Türisolierung in aufgespannter Form zu halten. Die Position/en des mindestens einen Halteelements entsprechen (einer) Position/en jeweils eines korrespondierenden Halteelements, das/die beispielsweise in einem Flugzeugkabinenabschnitt an oder um eine Passagiertür angeordnet ist/sind. Jedes Halteelement kann somit an einem korrespondierenden Halteelement befestigt werden und so die Türisolierung über die Passagiertür aufspannen und in dieser Lage fixieren.

In einer Implementierungsvariante kann das mindestens eine Textil ein Vlies oder ein Gewebe sein oder umfassen. So kann das Vlies auch ein gewebtes Vlies sein oder eine Struktur mit beliebig angeordneten Fasern aufweisen. Ferner kann das Vlies ein Bestandteil der Türisolierung sein, während ein anderer Bestandteil ein dünner Stoff ist, der zumindest auf einer Seite des Vlieses angeordnet ist und mit diesem verbunden ist. Ebenso kann das Vlies in einer dreilagigen Türisolierung von beiden Seiten mit einem Stoff belegt sein und somit zwischen zwei Stoffbahnen eingeschlossen sein.

Ferner kann das mindestens eine Textil aus Polyester oder einer Polyester enthaltenden Faser hergestellt sein. Polyester bietet den Vorteil, dass es leicht ist, sich leicht falten lässt und auch hitzebeständig ist.

Selbstverständlich kann das mindestens eine Textil auch aus verschiedenen Materialien hergestellt sein. So kann zum Beispiel ein Vlies aus Polyester oder einem anderen Polymer hergestellt sein, während das Vlies mit einem Gewebe oder einem anderen Stoff zumindest auf einer Seite bezogen ist. Das Gewebe oder der Stoff kann beispielsweise aus Baumwolle oder einem anderen Material hergestellt sein. Dadurch kann der optische Eindruck der Türisolierung leicht angepasst und verbessert werden.

In einer anderen Implementierungsvariante kann das Textil mindestens einen Abschnitt mit einer dreidimensionalen Gestalt aufweisen. Der Abschnitt mit einer dreidimensionalen Gestalt ist vorzugsweise von gleicher Stärke (Dicke). Zum Beispiel kann der mindestens eine Abschnitt so geformt sein, dass er ein entsprechend geformtes Element der Passagiertür bedeckt und/oder umschließt. Der mindestens eine Abschnitt kann zum Beispiel durch (Heiß-) Pressen und/oder Abnähen hergestellt sein.

In einer weiteren Implementierungsvariante kann das mindestens eine Textil aus mindestens zwei Teilstücken bestehen, die aneinander angrenzende Abschnitte der Passagiertür jeweils bedecken und isolieren. Zum Beispiel kann die Türisolierung einen oberen Abschnitt umfassen, der einen oberen Teil der Passagiertür bedeckt und isoliert, der für gewöhnlich wenige oder keine Erhebungen oder andere Elemente aufweist. Dieser obere Abschnitt der Türisolierung kann daher relativ flach ausgestaltet sein.

Ferner kann die Türisolierung einen unteren Abschnitt umfassen, der einen unteren Teil der Passagiertür bedeckt und isoliert. Gerade im unteren Bereich von Passagiertüren in Flugzeugen sind dreidimensional hervorstehende Komponenten angeordnet, wie zum Beispiel ein Haltearm oder Schwenkarm der Passagiertür und/oder eine Notrutsche mit zugehöriger Abdeckung. In diesem unteren Abschnitt kann die Türisolierung eine entsprechend geformte Gestalt einnehmen, um sich optimal an die Passagiertür und ihre Elemente anzuschmiegen. In diesem unteren Abschnitt kann die Passagiertür eine dreidimensionale Gestalt aufweisen.

Gemäß noch einen weiteren Aspekt zum besseren Verständnis der vorliegenden Offenbarung kann ein Flugzeug mit mindestens einem Flugzeugkabinenabschnitt gemäß dem ersten Aspekt ausgestattet sein. Alternativ oder zusätzlich kann ein Flugzeug mit mindestens einer Türisolierung gemäß dem weiteren Aspekt ausgestattet sein.

Ferner können die oben beschriebenen Aspekte, Implementierungsvarianten Beispiele selbstverständlich kombiniert werden, ohne dass dies explizit beschrieben ist. Jede der beschriebenen Implementierungsvarianten und jedes Beispiel ist somit optional zu jedem der Aspekte und deren Implementierungsvarianten und Beispielen oder bereits Kombinationen davon zu sehen. Die vorliegende Offenbarung ist somit nicht auf die einzelnen Ausgestaltungen und Implementierungsvarianten in der beschriebenen Reihenfolge oder einer bestimmten Kombination der Aspekte und Implementierungsvarianten beschränkt.

Bevorzugte Ausführungsbeispiele der Erfindung werden nun anhand der beigefügten schematischen Zeichnungen näher erläutert, wobei:
- Figur 1: schematisch eine Ansicht eines Flugzeugkabinenabschnitts zeigt;
- Figur 2: schematisch eine Türisolierung zeigt;
- Figur 3: schematisch eine Innenansicht und Außenansicht einer Passagiertür in einem Türrahmen zeigt;
- Figur 4: schematisch zwei Außenansichten und eine Innenansicht eines Türrahmens zeigt;
- Figur 5: schematisch Detailansichten von Halteelementen zeigt; und
- Figur 6: schematisch eine zusammengefaltete und verstaute Türisolierung zeigt.

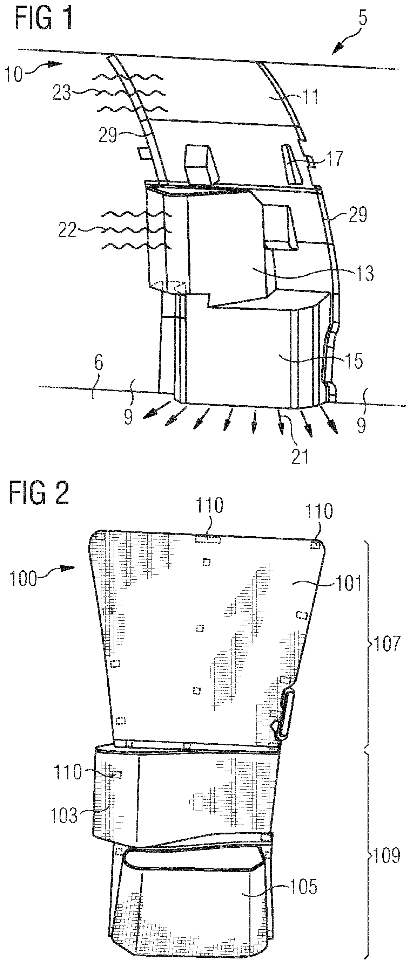

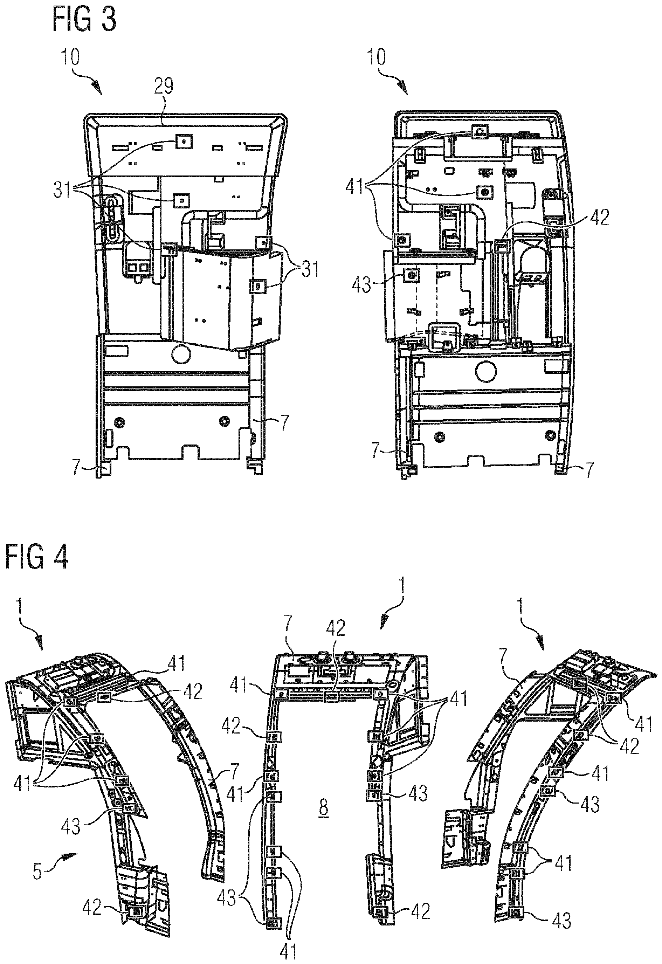

Figur 1 zeigt schematisch eine Innenansicht eines Flugzeugkabinenabschnitts 5, der insbesondere eine Passagiertür 10 umfasst. Die Passagiertür 10 ist in einem Türrahmen 7 (Figur 4) angeordnet und dazu eingerichtet, eine von dem Türrahmen 7 gebildete Türöffnung 8 (Figur 4) in einem Flugzeug 1 zu verschließen. Durch die Passagiertür 10 können Passagiere das Flugzeug 1 betreten oder verlassen. Der Türrahmen 7 ist in Figur 1 von Verkleidungselementen 9, die beispielsweise das optisch Innere einer Flugzeugkabine bilden, bedeckt. Auf der Innenseite ist vor der Passagiertür 10 ein Fußboden 6 des Flugzeugkabinenabschnitts 5 angeordnet. Dies kann insbesondere der Fußboden 6 eines Gangs sein, der sich von der Passagiertür 10 in das Innere der Flugzeugkabine erstreckt.

Die Passagiertür 10 umfasst in der dargestellten Variante einen oberen Abschnitt, der mit einem zugehörigen Verkleidungselement 11 versehen ist, sowie einem unteren Abschnitt. Der obere Abschnitt zeichnet sich durch eine relativ durchgängige Oberfläche aus. Mit anderen Worten weist das Verkleidungselement 11 wenige bis gar keine Erhebungen oder Aussparungen 17 auf.

Der untere Abschnitt hingegen kann beispielsweise einen Haltearm oder Schwenkarm 13 umfassen, an dem die Passagiertür 10 drehbar befestigt ist und mit dem die Passagiertür 10 von einer Schließstellung (in Figur 1 dargestellt) zu einer Offenstellung (nicht dargestellt) bewegt werden kann. Der Schwenkarm 13 kann optional auch mit einem entsprechenden Verkleidungselement versehen sein. In dem unteren Abschnitt der Passagiertür 10 ist ferner die Abdeckung oder Verkleidung 15 einer Notrutsche abgebildet. Während der obere Abschnitt relativ plan ist, sind im unteren Bereich verschiedene Elemente, wie zum Beispiel der Schwenkarm 13 und die Notrutsche 15, die in das Innere der Flugzeugkabine hervorstehen.

In der Schließstellung der Passagiertür 10 verschließt diese zwar die Türöffnung 8, es bleibt jedoch immer ein gewisser Spalt 29 zwischen der Passagiertür 10 und dem Türrahmen 7. Dadurch kann es zu einem Wärmeverlust in dem Flugzeugkabinenabschnitt 5 kommen. So kann insbesondere im Bereich des Fußbodens 6 ein Luftstrom 21 von dem Spalt 29 in das Innere der Flugzeugkabine entstehen, wobei die Luft des Luftstroms 21 meist kälter ist als in der Flugzeugkabine. Ferner kann von bestimmten Elementen oder Abschnitten der Passagiertür 10 Kälte "abstrahlen", d. h. kalte Elemente der Passagiertür 10, wie zum Beispiel der Schwenkarm 13 oder auch das Verkleidungselement 11 im oberen Abschnitt, entziehen der Umgebung 22, 23 Wärme, wodurch diese Umgebung 22, 23 kalt wirkt.

Figur 2 zeigt eine Türisolierung 100, die beispielsweise für die Passagiertür 10 aus Figur 1 bestimmt sein kann. Die Türisolierung 100 umfasst mindestens ein Textil, das in mindestens einer Richtung größer ist als die zugehörige Passagiertür 10. Zum Beispiel kann die Türisolierung 100 an ihrer oberen Seite, an ihrer linken Seite, an ihrer rechten Seite und/oder an ihrer unteren Seite über die Passagiertür 10 hinausragen. So kann die Türisolierung 100 an mindestens einer Seite zumindest abschnittsweise auch einen Türspalt 29 überdecken, wenn die Türisolierung 100 auf der in ihrer Schließstellung befindlichen Passagiertür 10 angebracht ist.

Das mindestens eine Textil kann zum Beispiel ein Vlies sein oder umfassen. Ferner kann das Textil alternativ ein Gewebe sein oder zusätzlich ein Gewebe umfassen. Lediglich beispielhaft kann das Textil aus Polyester sein oder eine Polyester enthaltende Faser umfassen.

Ferner kann die Türisolierung 100 an eine Passagiertür 10 angepasst sein. So kann auch die Türisolierung 100 einen oberen Abschnitt 107 und einen unteren Abschnitt 109 umfassen, der jeweils in seiner Größe mit dem oberen bzw. unteren Abschnitt der Passagiertür 10 korrespondiert (in mindestens einer Richtung jedoch größer ist als die Passagiertür 10). Der obere Abschnitt 107 der Türisolierung 100 zeichnet sich durch einen ebenen Verlauf aus. Beispielsweise kann der obere Abschnitt 107 eine durchgängige Fläche oder ein durchgängiges Gewebe sein oder bilden. Dieser obere Abschnitt 107 eignet sich daher auch, eine Applikation (nicht dargestellt) auf der Türisolierung 100 anzubringen oder darin zu integrieren. Beispielsweise kann eine Figur, ein Logo (zum Beispiel der Fluggesellschaft), ein Schriftzug, ein Bild, etc. auf die Türisolierung 100 aufgedruckt, eingesteckt, aufgenäht oder anderweitig darauf befestigt sein.

Der untere Abschnitt 109 des Textils kann mindestens einen Abschnitt 103, 105 umfassen, der so geformt ist, dass er ein entsprechend geformtes Element 13, 15 der Passagiertür 10 umschließt. Mit anderen Worten ist das Textil im unteren Bereich 109 so geschneidert oder geformt, dass es das dreidimensionale Element 13, 15 der Passagiertür 10 bedeckt und zur Innenseite der Flugzeugkabine hin verdeckt. Dadurch wird eine optimale Isolierung dieser Elemente der Passagiertür 10 erreicht.

So kann zum Beispiel ein Abschnitt 103 entsprechend dem Schwenkarm 13 geformt sein und diesen auf einer Oberseite, Unterseite und Innenseite bedecken. Gleiches gilt für den Abschnitt 105, der die Notrutsche 15 nachformt oder eine dazu korrespondierende dreidimensionale Form aufweist, die im Wesentlichen alle (sichtbaren) inneren Flächen der Notrutsche 15 bedeckt.

Das mindestens eine Textil kann einstückig hergestellt sein, d. h. der obere Abschnitt 107 und der untere Abschnitt 109 sind aus einem Stück gefertigt. Alternativ kann das Textil aus mehreren Abschnitten hergestellt und zusammengenäht oder zusammengeklebt werden. Ebenfalls alternativ kann das Textil aus mehreren Abschnitten bestehen, die einzeln bestehen bleiben und einzeln an die Passagiertür 10 angebracht werden können. Letzteres kann die Anbringung und auch das Verstauen erleichtern.

Die Türisolierung 100 umfasst ferner mindestens ein Halteelement 110, das in oder an dem mindestens einen Textil angebracht ist. Es ist zu beachten, dass in Figur 2 nicht alle Halteelemente 110 mit Bezugszeichen versehen wurden, um die Lesbarkeit der Darstellung zu gewährleisten. Das Halteelement 110 dient insbesondere dazu, die Türisolierung 100 zu halten. Das mindestens eine Halteelement 110 kann beispielsweise entlang eines Umfangs der Türisolierung 100 angeordnet sein. Ferner kann das mindestens eine Halteelement 110 auch in einem zentralen Bereich der Türisolierung 100 angeordnet sein. Ein Halteelement 110 im Umfangsbereich der Türisolierung 100 ermöglicht eine sichere Anbringung der Türisolierung 100 im Randbereich der Passagiertür 10 sowie über dem Spalt 29. Ein Halteelement 110 im zentralen Bereich der Türisolierung 100 verhindert ein Durchhängen der Türisolierung 100, d. h. einen Zustand, in dem die Türisolierung 100 von der Passagiertür 10 beabstandet ist.

Ferner können insbesondere in dem Bereich 109, in dem dreidimensionale Formen an der Passagiertür 10 sowie der Türisolierung 100 vorhanden sind, mindestens ein Halteelement 110 in einem äußeren Randbereich der dreidimensionalen Form angeordnet sein. Dadurch wird die Türisolierung 100 möglichst nah im Bereich des Türspalts 29 und/oder der Verkleidungselemente 9 im Bereich des Türrahmens 7 und/oder in einer zugehörigen Ebene entlang der Passagiertür 10 gehalten und die dreidimensionale Form der Türisolierung 100 ist optimal über die entsprechende dreidimensionale Form der Passagiertür 10 gestülpt.

In Figur 3 ist ein Flugzeugkabinenabschnitt 5 mit einer Passagiertür 10 in ihrer Schließstellung und zugehörigem Türrahmen 7 in einer Innenansicht (links in Figur 3) und einer Außenansicht (rechts in Figur 3) gezeigt. In beiden Ansichten sind Verkleidungselemente 9, 11 der Flugzeugkabine bzw. Passagiertür 10 nicht dargestellt.

Der Flugzeugkabinenabschnitt 5 umfasst ein erstes Halteelement 41-43, das an der Passagiertür 10 angeordnet ist. Das erste Halteelement 41-43 kann beispielsweise ein Magnet sein, der auf einer Außenseite der Passagiertür 10 (siehe rechts in Figur 3) angebracht ist. Die entsprechenden Positionen 31 auf der Innenseite der Passagiertür 10 sind in Figur 3 links hervorgehoben. Diese Positionen 31 entsprechen den Positionen des Halteelements 110, also einem zweiten Halteelement 110, dass an und/oder in der Türisolierung 100 angeordnet ist. Zu dem Magneten korrespondierend kann das zweite Halteelement 110 ein Metall sein oder umfassen, wodurch die Türisolierung 100 mit ihren zweiten Halteelementen 110 an der Passagiertür 10 durch die Magnetkräfte der ersten Halteelemente 41-43 befestigt werden kann.

Selbstverständlich können die ersten und zweiten Halteelemente 41-43, 110 auch andere Halteelemente sein, wie zum Beispiel jeweils eine Hälfte eines Druckknopfes oder jeweils ein korrespondierender Teil eines Klettverschlusses. In diesem Fall wäre das erste Halteelement 41-43 auf der Innenseite der Passagiertür 10 angeordnet, um von der Innenseite erreichbar zu sein (also an den links in Figur 3 dargestellten Positionen 31).

Figur 4 zeigt ferner den Türrahmen 7 mit der Türöffnung 8 des Flugzeugkabinenabschnitts 5, wobei die Passagiertür 10 entfernt wurde. Auch an den Türrahmen 7 können erste Halteelemente 41-43 angeordnet werden. Während in der mittleren Darstellung der Figur 4 die Halteelemente 41-43 auf der Innenseite des Türrahmens 7 vorgesehen sind, können diese alternativ oder zusätzlich auch auf einer Außenseite (siehe linke und rechte Darstellung der Figur 4) des Türrahmens 7 angeordnet sein. Außenseitig angebrachte Halteelemente 41-43 können insbesondere durch einen Magnet implementiert sein, dessen Magnetkräfte auf die Innenseite des Türrahmens 7 wirken, wo sie auf ein magnetisch wirksames Material einwirken können. Natürlich können die ersten Halteelemente 41-43 auch magnetisch wirksame Materialien sein, während die zweiten Halteelemente 110 in der Türisolierung 100 Magnete sind. In beiden Fällen lässt sich eine Türisolierung 100 mit entsprechenden zweiten Halteelementen 110 innenseitig in dem Flugzeugkabinenabschnitt 5 an dem Türrahmen 7 befestigen. Auch hier können die Halteelemente 41-43, 110 durch Druckknöpfe, Klettverschlüsse o. ä. Befestiger implementiert sein.

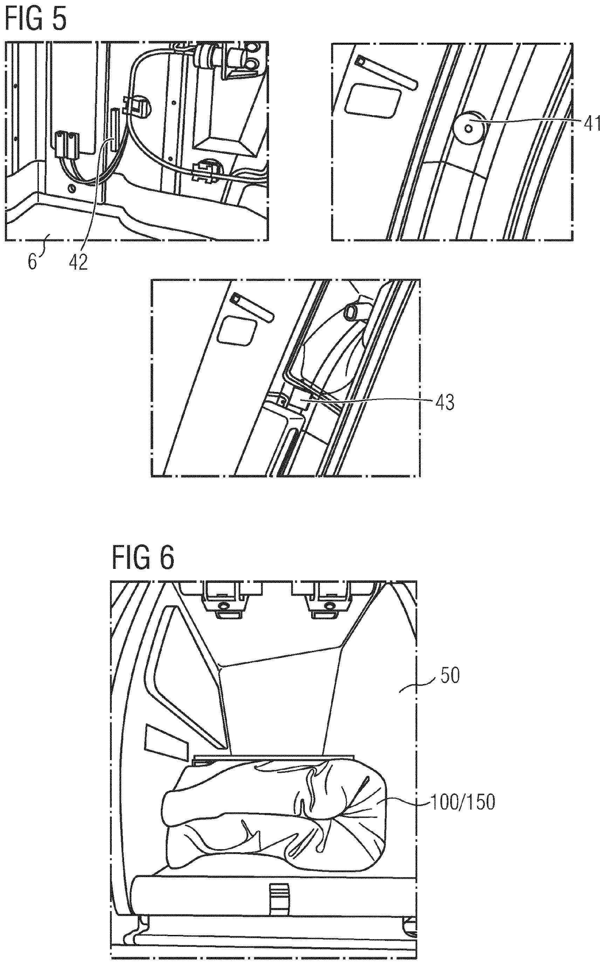

In Figur 5 sind entsprechende erste Halteelemente 41-43 beispielhaft dargestellt. Insbesondere bei Magneten oder magnetisch wirksamen Halteelementen 41-43 können diese in ihrer Form an die Umgebung (hier einer Außenseite des Türrahmens 7) angepasst sein. So kann das erste Halteelement 42 beispielsweise eine rechteckige lang gestreckte Form aufweisen. Ein anderes erstes Halteelement 41 kann kreisförmig oder elliptisch sein. Ein weiteres Halteelement 43 kann quadratisch geformt sein oder, wie in Figur 5 dargestellt, ein magnetisch wirksames Material in Form einer dünnen Metallplatte sein. Die entsprechenden zweiten Halteelemente 110 in/an der Türisolierung 100 können entsprechend geformt sein, um eine möglichst gute Fixierung zu bewerkstelligen.

Figur 6 schließlich zeigt eine Türisolierung 100 im zusammengefalteten Zustand. Da die Türisolierung 100 aus einem textilen Material hergestellt ist, kann sie eine geringe Dicke aufweisen, beispielsweise zwischen 2 und 10 mm, vorzugsweise zwischen 3 und 7 mm.

Dadurch lässt sich die Türisolierung 100 sehr klein zusammenlegen und in einfacher Weise verstauen. In Figur 6 ist die Türisolierung 100 zusätzlich in einer Tasche 150 verpackt, die einfach in ein Gepäckfach 50 in dem Flugzeug 1 gelegt werden kann, ohne dies völlig zu blockieren. Andere Stauräume/Staufächer in der Kabine des Flugzeuges 1 sind ebenfalls möglich.

## Patentansprüche

1. Flugzeugkabinenabschnitt (5), umfassend:
eine Flugzeugaußenhaut; einen Türrahmen (7), der eine Türöffnung (8) in der Flugzeugaußenhaut bildet;
eine Passagiertür (10), die an dem Türrahmen (7) angeordnet ist und dazu eingerichtet ist, die Türöffnung (8) zu verschließen; und
einen innenseitig vor der Passagiertür (10) angeordneten Fußboden (6) wobei
eine Türisolierung (100), die innenseitig an der Passagiertür (10) zumindest abschnittsweise befestigbar ist und anliegt und aus einem textilen Material hergestellt ist, das wärmeisolierend und/oder luftstromhemmend ist,
wobei die Türisolierung (100) so dimensioniert ist, dass sie in einem unteren Abschnitt größer ist als die Türöffnung (8) und auf dem Fußboden (6) des Flugzeugkabinenabschnitts (5) aufliegt.

2. Flugzeugkabinenabschnitt (5) gemäß Anspruch 1, ferner umfassend:
ein erstes Halteelement (41-43), das an dem Türrahmen (7) und/oder an der Passagiertür (10) angeordnet ist; und
ein zweites Halteelement (110), das an und/oder in der Türisolierung (100) angeordnet ist und dazu eingerichtet ist, mit dem ersten Halteelement (41-43) in Wirkverbindung zu treten und die Türisolierung (100) zu halten.

3. Flugzeugkabinenabschnitt (5) gemäß Anspruch 2, wobei das erste Halteelement (41-43) ein magnetisches Material oder ein magnetisch wirksames Material umfasst und das zweite Halteelement (110) dazu korrespondierend ein magnetisch wirksames Material oder ein magnetisches Material umfasst.

4. Flugzeugkabinenabschnitt (5) gemäß Anspruch 3, wobei das magnetische Material oder das magnetisch wirksame Material des ersten Halteelements (41-43) an einer Außenseite eines Verkleidungselements (9, 11-15) des Türrahmens (7) oder der Passagiertür (10) angeordnet ist.

5. Flugzeugkabinenabschnitt (5) gemäß Anspruch 2, wobei das erste und zweite Halteelement (41-43, 110) zusammen einen Druckknopf oder einen Klettverschluss bilden.

6. Flugzeugkabinenabschnitt (5) gemäß Anspruch 2, wobei die Türisolierung aus mindestens einem Textil (101-109) besteht, das ein Vlies ist oder umfasst, und wobei vorzugsweise das mindestens eine Textil (101-109) aus Polyester oder einer Polyester enthaltenden Faser hergestellt ist.

7. Flugzeugkabinenabschnitt (5) gemäß Anspruch 6, wobei das mindestens eine Textil (101-109) mindestens einen Abschnitt (103, 105) mit einer dreidimensionalen Gestalt aufweist, wobei der mindestens eine Abschnitt (103, 105) so geformt ist, dass er ein entsprechend geformtes Element (13, 15) der Passagiertür (10) umschließt.

8. Flugzeugkabinenabschnitt (5) gemäß Anspruch 6 oder 7, wobei das mindestens eine Textil (101-109) aus mindestens zwei Teilstücken (107, 109) besteht, die aneinander angrenzende Abschnitte der Passagiertür (10) jeweils bedecken und isolieren.

9. Flugzeug (1) mit mindestens einem Flugzeugkabinenabschnitt (5) gemäß einem der Ansprüche 1 bis 8.

## Claims

1. Aircraft cabin section (5), comprising:
an aircraft skin;
a door frame (7), which forms a door opening (8) in the aircraft skin;
a passenger door (10), which is arranged on the door frame (7) and is designed to close the door opening (8); and
a floor (6), which is arranged on the inner side in front of the passenger door (10); wherein
a door insulation means (100), which is fastenable on, and lies against, the inner side of the passenger door (10) at least in sections and is produced from a textile material which is heat-insulating and/or airflow-inhibiting,
wherein the door insulation means (100) is dimensioned in such a manner that it is larger in a lower section than the door opening (8) and rests on the floor (6) of the aircraft cabin section (5).

2. Aircraft cabin section (5) according to Claim 1, furthermore comprising:
a first holding element (41-43), which is arranged on the door frame (7) and/or on the passenger door (10); and
a second holding element (110), which is arranged on and/or in the door insulation means (100) and is designed to enter into operative connection with the first holding element (41-43) and to hold the door insulation means (100).

3. Aircraft cabin section (5) according to Claim 2, wherein the first holding element (41-43) comprises a magnetic material or a magnetically effective material and, corresponding thereto, the second holding element (110) comprises a magnetically effective material or a magnetic material.

4. Aircraft cabin section (5) according to Claim 3, wherein the magnetic material or the magnetically effective material of the first holding element (41-43) is arranged on an outer side of a lining element (9, 11-15) of the door frame (7) or of the passenger door (10).

5. Aircraft cabin section (5) according to Claim 2, wherein the first and second holding element (41-43, 110) together form a press stud or a hook and loop fastener.

6. Aircraft cabin section (5) according to Claim 2, wherein the door insulation means consists of at least one textile (101-109), which is or comprises a fleece, and wherein preferably the at least one textile (101-109) is produced from polyester or a fibre containing polyester.

7. Aircraft cabin section (5) according to Claim 6, wherein the at least one textile (101-109) has at least one section (103, 105) with a three-dimensional configuration, wherein the at least one section (103, 105) is shaped in such a manner that it surrounds a correspondingly shaped element (13, 15) of the passenger door (10).

8. Aircraft cabin section (5) according to Claim 6 or 7, wherein the at least one textile (101-109) consists of at least two subsections (107, 109) which each cover and insulate mutually adjoining sections of the passenger door (10).

9. Aircraft (1) having at least one aircraft cabin section (5) according to one of Claims 1 to 8.

## Revendications

1. Section de cabine d'avion (5), comprenant:
un revêtement extérieur d'avion;
un encadrement de porte (7) formant une ouverture de porte (8) dans le revêtement extérieur d'avion;
une porte pour passagers (10) qui est disposée au niveau de l'encadrement de porte (7) et est conçue pour fermer l'ouverture de porte (8); et
un plancher (6) disposé côté intérieur devant la porte pour passagers (10),
dans laquelle une isolation de porte (100) peut côté intérieur être fixée à la porte pour passagers (10) au moins par endroits et est adjacente à celle-ci et est fabriquée à partir d'un matériau textile qui est thermiquement isolation et/ou ralentisseur de flux d'air,
dans laquelle l'isolation de porte (100) est dimensionnée de façon à être dans une section inférieure plus grande que l'ouverture de porte (8) et à reposer sur le plancher (6) de la section de cabine d'avion (5).

2. Section de cabine d'avion (5) selon la revendication 1, comprenant en outre:
un premier élément de maintien (41 à 43) qui est disposé au niveau de l'encadrement de porte (7) et/ou de la porte pour passagers (10); et
un deuxième élément de maintien (110) qui est disposé sur et/ou dans l'isolation de porte (100) et qui est conçu pour entrer en relation fonctionnelle avec le premier élément de maintien (41 à 43) et pour maintenir l'isolation de porte (100).

3. Section de cabine d'avion (5) selon la revendication 2, dans laquelle le premier élément de maintien (41 à 43) comprend un matériau magnétique ou un matériau à effet magnétique, et le deuxième élément de maintien (110) comprend de manière correspondante un matériau à effet magnétique ou un matériau magnétique.

4. Section de cabine d'avion (5) selon la revendication 3, dans laquelle le matériau magnétique ou le matériau à effet magnétique du premier élément de maintien (41 à 43) est disposé sur une face extérieure d'un élément d'habillage (9, 11 à 15) de l'encadrement de porte (7) ou de la porte pour passagers (10).

5. Section de cabine d'avion (5) selon la revendication 2, dans laquelle le premier et le deuxième élément de maintien (41 à 43, 110) forment ensemble un bouton-poussoir ou une fermeture autoagrippante.

6. Section de cabine d'avion (5) selon la revendication 2, dans laquelle l'isolation de porte est composée d'au moins un textile (101 à 109) qui est ou comprend un non-tissé, et dans laquelle de préférence ledit au moins un textile (101 à 109) est fabriqué en polyester ou à partir d'une fibre contenant du polyester.

7. Section de cabine d'avion (5) selon la revendication 6, dans laquelle ledit au moins un textile (101 à 109) présente au moins une section (103, 105) de forme tridimensionnelle, dans laquelle ladite au moins une section (103, 105) est formée de telle sorte qu'elle enferme un élément de forme correspondante (13, 15) de la porte pour passagers (10).

8. Section de cabine d'avion (5) selon la revendication 6 ou 7, dans laquelle ledit au moins un textile (101 à 109) est composé d'au moins deux pièces partielles (107, 109) qui recouvrent et isolent respectivement des sections adjacentes les unes aux autres de la porte pour passagers (10).

9. Avion (1), comprenant au moins une section de cabine d'avion (5) selon l'une quelconque des revendications 1 à 8.
